# EUROPEAN PATENT APPLICATION

(11) **EP 4 817 704 A1**
(43) Date of publication of application: **07.10.2026**
(21) Application number: 26168882.4
(22) Date of filing: 30.03.2026
(51) Int. Cl.: A63F 13/211, A63F 13/23, A63F 13/245

(54) **INPUT PROCESSING USING ENCODING AND DECODING**

(30) Priority: 01.04.2025 US 202563781642 P; 03.06.2025 US 202519226319
(71) Applicant: Nintendo Co., Ltd., Kyoto 601-8501 (JP)
(72) Inventor: BERTOLUS, Frédéric, Kyoto, 6018501 (JP); PASQUIER, François-Xavier, 75001 Paris (FR); SINZGER, Simon, Kyoto, 6018501 (JP)
(74) Representative: Bardehle Pagenberg Partnerschaft mbB Patentanwälte Rechtsanwälte

(57) **Abstract**

The technology described relates to systems and methods that, at least, generate an input feed containing a plurality of input data, where the input data includes at least inertial sensing data generated by the inertial sensing circuitry, integrate the input feed into an encoder state and push the encoder state to a state buffer, and obtain feedback information based on a communication state between the first device and the second device. A decoder side may decode the payload data to generate output data, and utilize the output data (e.g., for game processing).

## Description

### CROSS REFERENCE TO RELATED APPLICATION(S)

This application claims priority to U.S. Patent Application No. 63/781,642, filed April 1, 2025, the entire contents of which are incorporated herein by reference.

### TECHNICAL OVERVIEW

Controller technology for video game systems has evolved greatly since the dawn of the first game system. For many years, most reliable controllers were required to physically connect to the game system (or computer) using a wire and connector so that data can be transferred between the game controller and the game system. Different wireless communication protocols have allowed game controllers to more reliably operate wirelessly from the game system. For example, many wireless controller arrangements take advantage of the Bluetooth^{®} communication protocol to communicate data between the system and the controller.

While these communication protocols have improved the controller's ability to operate wirelessly from the game system, these communication protocols still have certain drawbacks. In particular, controller arrangements deliver greater amounts of input data and are doing so at a greater frequency. For example, six axis inertial measurement unit (IMU) data is composed of 3 angular velocity axes and 3 acceleration axes which can be challenging to transmit through conventional communication channels (e.g., Bluetooth^{®}) with limited feedback. Missing samples due to packet loss generate integration errors that lead to integration drift (e.g., incorrect orientations). Thus, certain drawbacks exist designing communication protocols and/or software in association with these conventional communication channels.

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyrights whatsoever.

### BRIEF DESCRIPTION OF THE DRAWINGS

Fig. 1 shows a non-limiting example of a system 1 where a user can operate one or more controller(s) 10;
Fig. 2 shows a non-limiting example of an encoder 20 operating in conjunction with decoder 30 in system 1;
Figs. 3A and 3B also show non-limiting example flowcharts for processes associated with encoder 20 and/or decoder 30;
Figs. 4A and 4B show example timing diagrams between encoder 20 and decoder 30 depicting at least two layers of packet loss management;
Fig. 5A shows a non-limiting example data structure 500 showing an example header 510 for a generated payload;
Fig. 5B shows a non-limiting example data structure 500 of an example data 520 block of the payload data;
Fig. 5C shows another non-limiting example data structure 550;
Figs. 6A-6E are non-limiting example block diagrams depicting changes to the encoder 20 internal states; and
Fig. 7 shows a non-limiting example block diagram of hardware components associated with the system.

### DETAILED DESCRIPTION OF EXAMPLE NON-LIMITING EMBODIMENTS OF THE TECHNOLOGY

Game systems are capable of communicating with wireless controller(s) using various wireless communication protocols. Some game systems are designed so that the controller(s) can be physically connected to the game system, and then detached from the system so that the user can operate them wirelessly from the game system. These systems may use the Bluetooth^{®} communication protocol to communicate data between the controller(s) and the main system unit.

Due to certain drawbacks with current wireless communication protocols, data packets transferred between the controller(s) and main system unit may be lost leading to various processing errors. For the Bluetooth^{®} communication protocol, in order to match the legacy application programming interface (API) operating at 200 Hz, due to various bandwidth limitations, it is not possible to transmit a full signal between devices, and simple downscaling would significantly reduce the quality of the integration during input processing. Thus, there is a need for a system that provides high quality down-sampling and quantization, while also being resilient to packet loss. There is also a need for the system to advantageously utilize packet loss feedback (but also operate without any feedback).

This Summary is provided to introduce a selection of concepts in a simplified form that are further described below in the Detailed Description. This Summary is intended neither to identify key features or essential features of the claimed subject matter, nor to be used to limit the scope of the claimed subject matter; rather, this Summary is intended to provide an overview of the subject matter described in this document. Accordingly, it will be appreciated that the above-described features are merely examples, and that other features, aspects, and advantages of the subject matter described herein will become apparent from the following Detailed Description, Figures, and Claims.

In the following description, for purposes of explanation and nonlimitation, specific details are set forth, such as particular nodes, functional entities, techniques, protocols, etc. in order to provide an understanding of the described technology. It will be apparent to one skilled in the art that other embodiments may be practiced apart from the specific details described below. In other instances, detailed descriptions of well-known methods, devices, techniques, etc. are omitted so as not to obscure the description with unnecessary detail.

Sections are used in this Detailed Description solely in order to orient the reader as to the general subject matter of each section; as will be seen below, the description of many features spans multiple sections, and headings should not be read as affecting the meaning of the description included in any section.

### Example System for Input Processing Using Encoding and/or Decoding

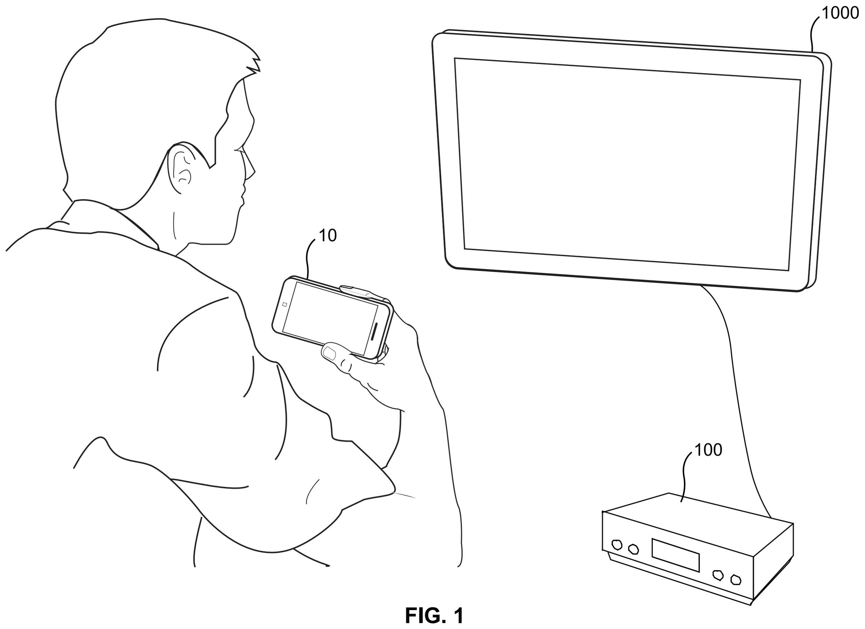

Fig. 1 shows a non-limiting example of a system 1 where a user can operate one or more controller(s) 10. System 1 includes at least one game system 100 where game system 100 can wirelessly communicate with controller(s) 10. In one example embodiment, game system 100 may connect to a separate display 1000. Of course, game system 100 may include a display integrated with the game system 100 where a user can play a game using the integrated display of system 100.

In one example embodiment, controller(s) 10 may be configured to attach/detach from game system 100. For example, controller(s) 10 may be attached to game system 100 where the user can hold multiple controller(s) 10 and game system 100 to play one or more video games. The user may also detach controller(s) 10 from game system 100 in order to operate controller(s) 10 in free space. Controller(s) 10 may include various input devices (e.g., directional sticks, buttons, touch sensitive areas) that allow the user to provide input by operating the device on the controller. Controller(s) 10 may also include various inertial sensing components (e.g., accelerometer, angular velocity sensors, compass) as well as other components to report various information (e.g., temperature) to system 100. These examples are of course non-limiting and the technology described herein envisions any variety of inputs and arrangements for controller(s) 10.

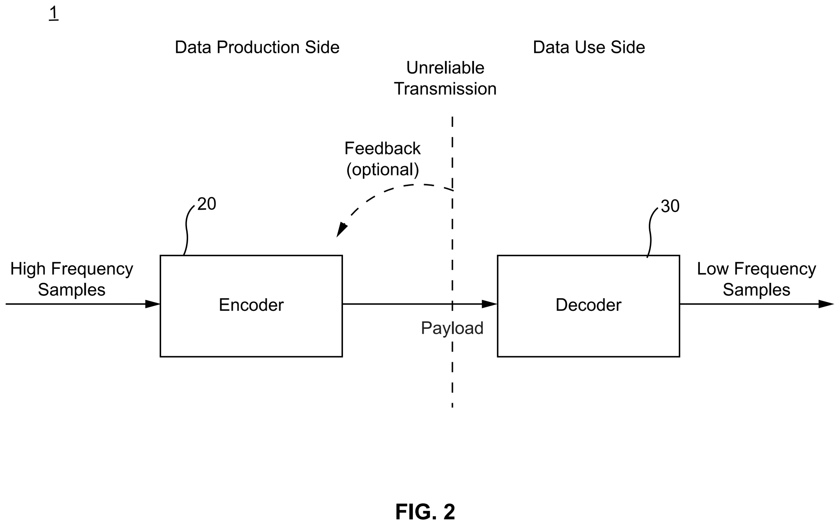

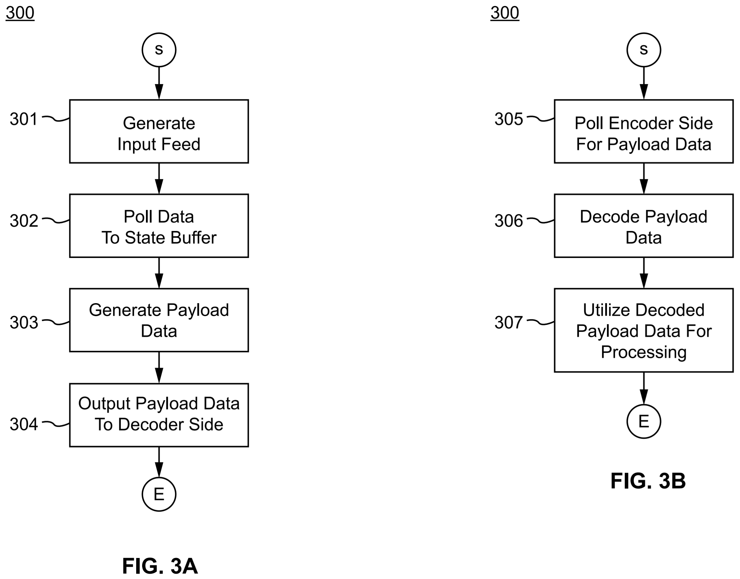

Fig. 2 shows a non-limiting example of an encoder 20 operating in conjunction with decoder 30 in system 1. Figs. 3A and 3B also show non-limiting example flowcharts for processes associated with encoder 20 and/or decoder 30. It should be appreciated that, while Fig. 2 only shows one encoder 20 and one decoder 30, such an example is non-limiting and the technology described herein envisions one or more of encoder 20 and/or one or more of decoder 30. In one example embodiment, encoder 20 may reside on or within controller(s) 10 while decoder 30 may reside on or within system 100. This example is also non-limiting and the technology described herein envisions any variety of manner in which encoder 20 and/or decoder 30 may reside. For example, controller(s) 10 and/or system 100 may include any combination of encoder 20 and/or decoder 30. Moreover, encoder 20 and/or decoder 30 may reside separate from controller(s) 10 and/or system 100 (e.g., in a separate network device and/or cloud computing environment).

In one example embodiment, encoder 20 may obtain input data from controller(s) 10 (e.g., step 301) where such input data may be produced from IMU sensor(s) of controller(s) 10. The input data may include a configuration at time of startup (e.g., of system 1). The input data may also include timestamps/output data rate (ODR) (which could be equivalent to a sample index). The input data may also include angular velocity samples (3 axes, floating point, radians per second), acceleration samples (3 axes, floating point, meters per second squared), temperature samples (floating point, degrees), and/or other metadata.

It should be appreciated that encoder 20 may generate (e.g., on demand) one or more payloads of encoded data (e.g., step S303) that can be transmitted to the decoder 30 (e.g., step 304). These payloads can have variable size (e.g., between 30 and 40 bytes), depending on the quantity of data to encode, where the number of payloads may be generated based on a particular feedback mode. System 1 may work in one or more of the following feedback modes: (1) no feedback (one payload is generated and sent to the decoder 30 without any feedback about if the packet containing this payload will be received or not), (2) quick feedback (one payload is generated and sent to the decoder 30, but the reception status of this packet is known before the next packet generation occurs -- the encoder 20 is notified about whether the packet has been lost or not), and/or (3) delayed feedback (the status of the previously sent packet is known, but only after the next packet generation -- in this situation the encoder 20 generates two payloads where one is used if the previous packet has been transmitted successfully and another is used if the previous packet has been lost). These examples are of course non-limiting and the technology described herein envisions any variety or number of feedback modes.

Decoder 30 may obtain input streams of encoder 20 payload (e.g., step 305) and generate, as output, a stream of output samples (e.g., step 306). In one example embodiment, decoder 30 (or the equipment associated with decoder 30) may poll encoder 20 (or the equipment associated with encoder 20) (e.g., step 305) to obtain the generated payload data at various time intervals. Decoder 30 may then decode the payload data (e.g., step 306) where the decoded payload data can be used for various processing (e.g., video game processing) (e.g., step 307).

The stream of output samples may include timestamps and durations as well as sample indices. The stream of output samples may also include angular velocity data (3 axes, floating point, radians per second), acceleration data (3 axes, floating point, meters per second squared), temperature data (floating point, degrees), and/or other metadata. In certain example embodiments, feedback provided to encoder 20 may be provided by a transport layer between encoder 20 and decoder 30 (i.e., and not by decoder 30 alone).

In certain example embodiments, most of the encoder 20 and the decoder 30 depend internally on some timestamp and duration computation. On the encoder 20 and (in most of the decoder 30), the timestamp and duration are called timestamp (ODR) and duration (ODR), where one unit of timestamp or duration equals one period of the sensor ODR (output data rate). For example, if the sensor ODR is 800 Hz, one unit of timestamp (ODR) will represent 1.25 ms (1/800s), and if the sensor ODR is 960 HZ, one unit of timestamp (ODR) will represent 1.04 ms (1/960s).

Encoder 20 includes at least two functions: Feed() and GeneratePayload(). The Feed() function is called for each input high frequency sample (e.g., every 1.25 ms). At any moment it is possible to call the GeneratePayload(), wherein, in one example embodiment, the GeneratePayload() function may be called every 5 ms (or every 15 ms). The Feed() function will preprocess the input sample and store the result in its internal state for a future GeneratePayload() call. The GeneratePayload() call will generate a payload from all the new samples since the last generated state.

During Feed(), each input sample (e.g., acceleration, angular velocity, temperature) is fed into the encoder 20 and the sample is integrated into an internal encoder state where the state is then pushed into a state buffer (e.g., step 302). A new encoder 20 internal state is created from the previous state and an input sample. The state stores data internally in a specific way. For example, from two states A and B, spaced in time by an arbitrary duration (e.g., 5 ms, 30 ms, or 1 s), it is possible to recover a sample with angular velocity, acceleration, temperature, and/or other data that summarizes, as precisely as possible, what happens between states A and B. The newly generated state is then pushed into the state buffer.

Certain information stored in each state may include any of: timestamp (ODR) (timestamp of the input sample), orientation (quaternion representing an orientation without link to real world controller orientation), acceleration accumulator (sum of rotated acceleration), and/or temperature accumulator (sum of temperature).

The timestamp (ODR) of the new state can include the timestamp (ODR) of the input sample used to integrate the new state. The difference with the previous state is always 1, and the timestamp (ODR) is mainly used to compute duration between two states by subtracting the timestamps. The timestamp may be stored as a 32 bits unsigned integer so that ambiguous differences will appear for duration of about 50 days (e.g., higher than the Bluetooth^{®} disconnection timeout).

The state orientation represents a virtual orientation with no link with real world controller orientation. The state orientation is initialized with an identity quaternion where each new state orientation is computed integrating the input sample angular velocity to the previous state orientation. As the angular velocity from the sample is biased and noisy, the relative orientation compared to world orientation will drift over time. However, given two states with orientation, it is possible to compute an angle between the quaternion, and by dividing by the duration between the states, it is possible to compute an average angular velocity which provides a good approximation of the input signal. The state orientations may be stored as 32 bits float quaternion.

It is generally not feasible to store real velocity in the state as it would require removing gravity from the signal thereby requiring very precise integration using unbiased orientation (velocity may also not be needed as the decoder 30 needs to output acceleration in any case). The state stores an acceleration accumulator that is the sum of quantized rotated acceleration. The accumulator is a 64 bits integer that can overflow freely. The sum of acceleration allow system 1 to compute the difference between two arbitrary states and dividing by the duration between the states, a good average of the input signal is provided.

It should be appreciated, however, that a simple accumulation tends to degrade the signal for long duration if there is some rotation movement. For example, using a signal of 1g acceleration and no rotation, accumulating this signal for 100 samples would provide a state from (0,0,0) to (0,0,981). In this case, any difference in state between the acceleration accumulator divided by the duration (ODR) would produce (0,0,9.81) as the expected signal. However if the signal is 1g acceleration with a 360° rotation on the Y-axis during the 100 samples, as the acceleration signal is local, the gravity vector will make a 360° rotation passing from (0,0,9.81) to (0,9.81,0), then (0,0, - 9.81) and (0,-9.81,0), before returning to (0,0,9.81). In this case, the signal will cancel out with itself and the sum after 100 samples will be (0,0,0) giving a zero average acceleration. For 180° rotation during a gap, the z-axis will cancel out giving a Y acceleration only with low value. An example illustration is shown below:

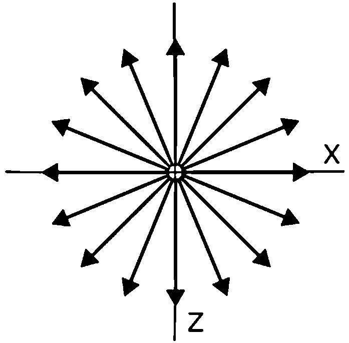

In both cases, a degraded signal results as the input signal is a 9.81 m/s² acceleration, with lower frequency is expected as output. To minimize this problem, the acceleration of the input sample is rotated with the state orientation before accumulation so the accumulation is performed in a reference that is not rotating as much compared to a perfect world reference (dismissing bias and noise errors). To compute an average acceleration between two states, the difference is computed between two rotated accumulators where the value is rotated back in local reference using the inverse of the state orientation. For a duration between states of tens (or few hundred) of milliseconds, the orientation integration error is small and the signal degradation due to rotation will be low. In the case of 1g signal with a 360° rotation, the rotated acceleration will stay at almost the same value for the 100 samples, so the length of the acceleration will stay at 1g.

The state buffer includes a history of old states that can be used later during the payload generation process. The state buffer includes at least two different ring buffers: a dense buffer containing 20 states and a sparse buffer containing 16 states. When a state is pushed into the state buffer, it is pushed into the beginning of the dense buffer. The dense buffer may always holds the 20 most recent states (about 20 ms for 960 Hz ODR samples). When the dense buffer is full and an old state is dropped from the end of the dense buffer, the sample is pushed to the beginning of the sparse buffer, in cases where its timestamp (ODR) modulo 16 is zero. As the sparse buffer stores 16 states spaced by a duration (ODR) of 16, it covers a sparse history of 256 input samples (about 270 ms for 960 Hz ODR).

An important property of the state buffer is that its content is deterministic. That is, given the last sample number N, it is possible to compute the sample number of each state that is in the state buffer. This property is used by the decoder 30 to know which states were available to the encoder 20 when it generated the payload and to know the sample duration without the need for transmitting the individual sample durations.

After a certain number of Feed() calls, the GeneratePayload() function can be called to generate a payload to be sent to the decoder 30. For example GeneratePayload() can be called every 5 ms (200 Hz), while Feed() can be called at 1660 Hz, or after 500 ms in some cases of packet loss in some feedback modes. The encoder 20 can store the last sent state, which may be stored separately from the state buffer. This allows a configuration slightly different from the stored state with the same timestamp (ODR) and allows system 1 to keep a state at timestamps (ODR) that would not have been kept in the sparse buffer or even dropped from the sparse buffer.

When GeneratePayload() is called, the encoder 20 will create a payload representing what happened between the last sent state and the most recent state. First, it will compute the payload duration (ODR) by computing the difference in the timestamp (ODR) of the start and the end state. Depending on the payload duration, the encoder 20 will decide on a payload pattern, and depending on the payload pattern, the payload will contain between zero and three samples. The encoder will attempt to generate samples with a duration close to 5 ms. Examples of generated samples include at least: (1) if the duration is 0, no sample or data, (2) if the duration is <= 7.5 ms, Pattern #0 (1 sample + temperature), (3) if the duration is <= 12.5 ms, Pattern #1 (2 samples + temperature), (4) if the duration is <= 17.5 ms, Pattern #2 (3 samples + temperature), and (5) if the duration is > 17.5 ms, Pattern #3 (3 samples).

The encoded samples are generated based on a start state and an end state. In the case of a payload with one sample, the sample will be generated from the last sent state (A) and the most recent state (B). However, for two or three samples, intermediate states from the state buffer will be used. Here the process is described for three samples, but the case for two samples is the same starting at step 3 with S1 equal to A: (1) the encoder 20 computes a target timestamp (ODR) at a third (rounding up) between A and B and then searches in the state buffer for the closest available sample T1, which matches or is more recent than this target sample; (2) the encoder 20 generates an encoded sample from state A to state T1 (this process updates the last sent state from A to a state S1 with the same timestamp (ODR) as T1, but with slightly different state); (3) the encoder 20 searches again in the state buffer for a target timestamp (ODR) in the middle between S1 and B and extracts state T2; (4) the encoder generates an encoded sample from state S1 to state T2 and computes S2; (5) the encoder generates an encoded sample from state S2 to state B and computes a state S3 with same timestamp (ODR) as B but with slightly different data (depending on the feedback mode, S3 will become the last sent state for the next GeneratePayload() call).

As the state buffer has a dense part, with one duration (ODR) interval and lasting about 20 ms, the sample will have an exact target match for pattern #0 to pattern #2. For pattern #3, the sparse buffer may be used so the target sample timestamp (ODR) may not be available and the three samples will not have a regular spacing. For a very long payload duration, exceeding the sparse buffer duration, the first sample will stretch and can become much longer than the other two samples (i.e., from A to the older sample in the state buffer). A sample generation process is described in more detail below

In particular, a sample is serialized from two states A and B and some context metadata. If the sample is the first sample of the payload, the state B orientation is directly encoded using a bit budget depending on the context. As the quaternion is expected to be normalized, the quaternion to encode is rescaled to make the largest component equal to 1 and only the three small components are serialized. The index of the largest component is encoded using 2 bits, the remaining bits are split in three to encode the smallest components. If the sample is not first the sample of the payload, an angular velocity is computed as the difference between orientation of state A and state B. This orientation is quantized using as a maximum possible angle the maximum reachable value: angular velocity * sample duration, or 2PI. The following table 1 provides an example bit budget for angular velocity/orientation encoding:

**Table 1**

| Bits per sample | Sample #1 | Sample #2 | Sample #3 |
|---|---|---|---|
| Pattern #0 | 96 | - | - |
| Pattern #1 | 72 | 66 | - |
| Pattern #2 | 66 | 39 | 42 |
| Pattern #3 | 66 | 48 | 48 |

Each sample encodes the equivalent of three components signals (here the equivalent as average bit per components). Table 2, reproduced below, depicts such samples:

**Table 2**

| Bits per component | Sample #1 | Sample #2 | Sample #3 |
|---|---|---|---|
| Pattern #0 | 32 | - | - |
| Pattern #1 | 24 | 22 | - |
| Pattern #2 | 22 | 13 | 14 |
| Pattern #3 | 22 | 16 | 16 |

For acceleration, the difference between state A and state B acceleration accumulator is computed and rotated into the local space using the state A orientation. This local acceleration accumulation difference is then encoded by quantifying it using the max reachable accumulation difference during the sample duration. The following table 3 provides the bit per component budget for acceleration encoding:

**Table 3**

| Bits per component | Sample #1 | Sample #2 | Sample #3 |
|---|---|---|---|
| Pattern #0 | 32 | - | - |
| Pattern #1 | 22 | 22 | - |
| Pattern #2 | 14 | 13 | 14 |
| Pattern #3 | 14 | 13 | 14 |

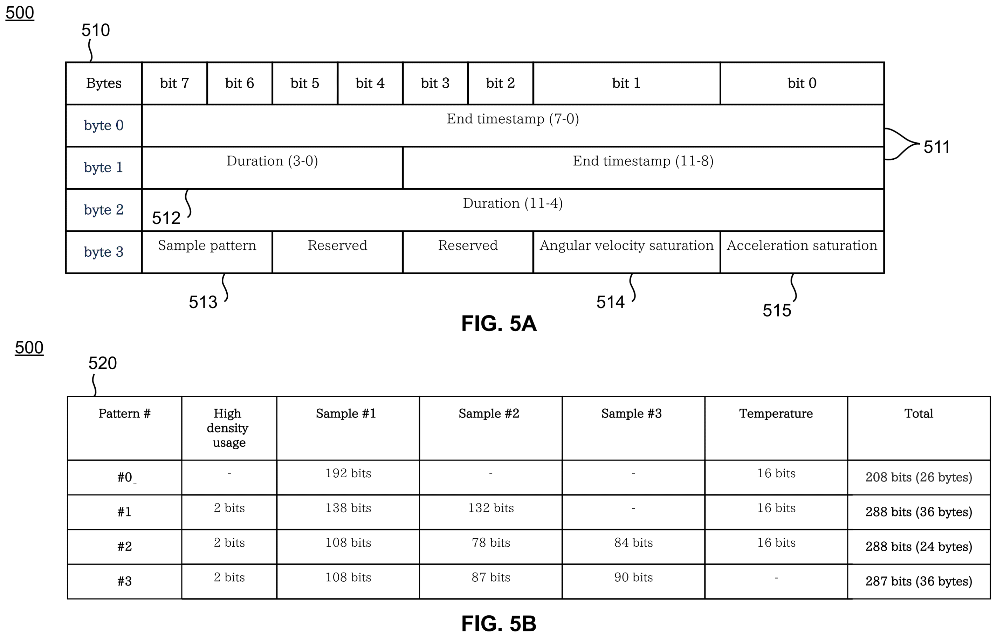

GeneratePayload() will produce a payload having a variable size varying from 4 bytes to 40 bytes. The general structure will include a 4 byte header, and a 0 to 36 bytes variable size payload data. Fig. 5A shows a non-limiting example data structure 500 showing an example header 510 for a generated payload. In one example embodiment, header 510 may be of a fixed size and contain all metadata required to interpret the payload data.

Header 510 includes a variety of fields each byte 0 to byte 3 includes different information having various bit sizes. In one example embodiment, header 510 will include, at least, an end timestamp field 511, a duration field 512, a sample pattern field 513, an angular velocity saturation field 514, and an acceleration saturation field 515. The end timestamp field 511 may include the timestamp (ODR) of the state B used to generate the payload. As this timestamp uses 12 bits, it may loop every 4.3 seconds at 960 Hz ODR.

The duration field 512 may include the difference (ODR) between the state A timestamp (ODR) and the state B timestamp (ODR). As this duration uses 12 bits, it overflows for a duration longer than 4.3 seconds at 960 Hz ODR. Sample pattern field 513 includes 2 bits indicating the type of pattern of the data (e.g., pattern #0, #1 #2 or #3). The angular velocity saturation field 514 and the acceleration saturation field 515 are used for secondary features described herein.

Fig. 5B shows a non-limiting example data structure 500 of an example data 520 block of the payload data. As can be seen in Fig. 5B, data 520 includes a variety of patterns (e.g., patterns #0-#3) where each pattern includes high density usage values, a plurality of sample values, a temperature value, and a total value. In one example embodiment, if a duration is zero, the sample pattern is set to #0 but the data section is empty. If a duration is higher than zero, the data section includes the data structure shown in the example data 520 of Fig. 5B. In one non-limiting example embodiment, the payloads shown in the data structures of Figs. 5A and 5B will be output by encoder 20 to decoder 30.

It should be appreciated that the nominal decoding process is simpler than the encoding one. The decoder 30 can obtain the encoded payload with or without knowing the data size (i.e., it can be always fed with a 42 bytes buffer even if only 4 bytes were used). The payload decoding will lead to generating zero to four samples into an output queue, where the decoder 30 will start to extract all the header 510 metadata.

Depending on the payload duration (ODR) and the sample pattern, the decoder 30 will know the way the payload data has been encoded and deduct a number of samples, bit per components, and other values. In the case of one sample in the payload, the duration is equal to the payload duration. However, with two or three samples, the duration must be split between output samples. The decoder 30 does not have access to the dense and sparse buffer of the encoder 20, but the logic is crafted so the timestamp ODR of every states in these buffers can be deducted from the state B timestamp LSB (the timestamp LSB are stored in the "end timestamp" 12 bits field of the payload). With this state B timestamp, the decoder 30 knows which samples were available during the payload generation: state B (end timestamp), state A (end timestamp - payload duration), all most recent states of the dense buffer (end timestamp - 1 to end timestamp - 19), and all the states of the sparse buffer (16 last state with timestamp - 20 % 16 == 0).

The decoder 30 can split the payload duration (ODR) in two or three intervals only ending to available states using the same algorithm than the encoder 20. For each sample, the decoder 30 will read the right amount of data according to the sample pattern and the sample index. For the first sample of the payload (e.g., sample #0), the decoder 30 will read and decode the encoded quaternion. If the first sample is received by the decoder 30, the decoder 30 will raise a flag to skip the output sample for this payload as no angular velocity can be computed for this sample. If first sample is not the first one received by the decoder 30, the sample's angular velocity is computed by differentiating the decoded quaternion with the last sample orientation, divided by the sample duration. Then, the quaternion is stored in the decoder 30, and the state will update the last sample orientation with the new quaternion.

For the other samples (e.g., sample #1 or sample #2), the angular velocity is obtained by the decoder 30 using the reverse of the encoding operation, using the max reachable range in the sample duration time frame as quantization max value. The last sample orientation is updated by integrating this decoded angular velocity. For the acceleration, the values are decoded the same way for each sample using the reachable range as quantization max value (similar to the acceleration encoding). Then, if the skip output flags has not been raised for this sample, the sample is pushed into the output sample queue. The number of bit per components for each sample index and pattern is a shared knowledge so there is no need to put the information in the payload.

One goal of the technology described herein is to guarantee optimal integration quality in case of lost packets. Without any packet loss management, sending only down-sampled raw data can lead to integration errors due to missing sample(s) that a simple interpolation on the decoder 30 side cannot correct with accuracy. The technology described herein includes at least two cumulative layers of packet loss management. One layer includes an active packet loss management system requiring a 1-bit feedback information about the previously sent packet. Another layer includes a passive packet loss management implementing some decoder 30 logic using the payload information to fully (or at least partially) recover the data.

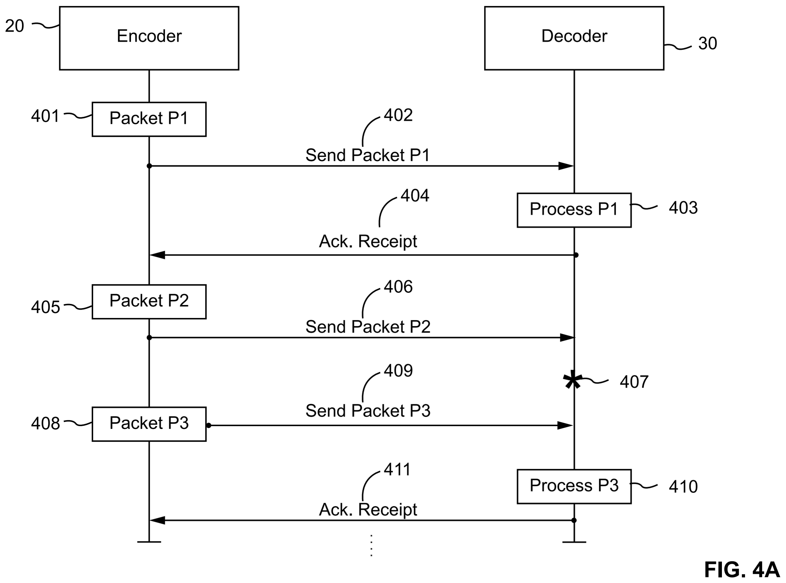

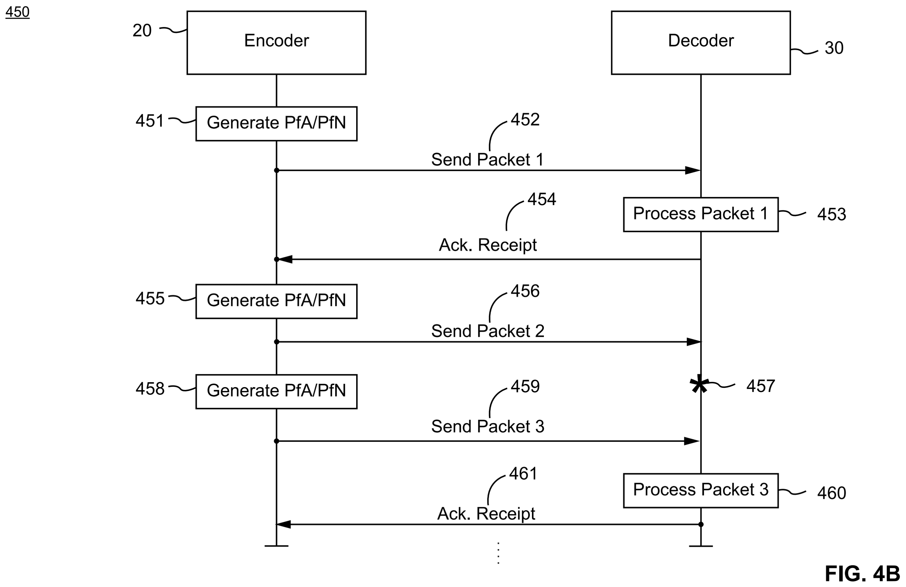

Figs. 4A and 4B show example timing diagrams between encoder 20 and decoder 30 depicting at least two layers of packet loss management. Fig. 4A shows an example timing diagram 400 associated with a "passive" packet loss management process while Fig. 4B shows an example timing diagram associated with an "active" packet loss management process. In the example shown in Fig. 4A, the encoder 20 side communicates packets containing the generated payload data to the decoder 30 side.

The process begins (at action 401) with the encoder 20 generate payload data as packet P1. In one example embodiment, decoder 30 side will poll encoder 20 side at regular intervals where encoder 20 side will then send the payload data in the different packets (e.g., action 402). Upon receiving packet P1, decoder 30 will process packet P1 (at action 403) and use the processed data (e.g., for video game processing). Decoder 30 may send a reply packet acknowledging successful receipt of packet P1 (at action 404). Encoder 20 will prepare another packet P2 containing new payload data (at action 405) and send the packet P2 (at action 406) to decoder 30.

In the example shown in Fig. 4A, decoder 30 (at action 407) may not successfully receive the packet P2 sent by encoder 20. In this example, decoder 30 may not send any form of acknowledgement (or, upon polling encoder 20, may send a message to encoder 20 indicating that no packet has been received). Even though decoder 30 may not receive packet P2, encoder 20 will continue to generate payload data and prepare the next packet P3 (at action 408). Encoder 20 will send packet P3 (at action 409) to decoder 30 where decoder 30 (upon successful receipt) will process packet P3 (at action 410) and acknowledge safe receipt (at action 411).

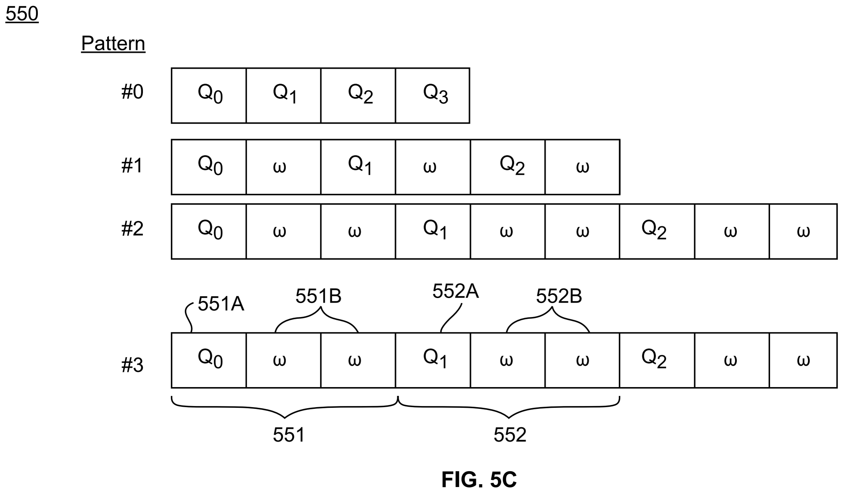

In the passive recovery process, encoder 20 will generate packets that include additional information so that decoder 30 can effectively reconstruct a missed packet. Fig. 5C shows non-limiting example packet(s) 550 sent from encoder 20 to decoder 30. In particular, packet(s) 550 may include a first packet 551 and a second packet 552 where the first packet 551 may not have been received by decoder 30. First packet 551 includes a first quaternion value 551A and first angular velocity values 551B. Similarly, second packet 552 will include a second quaternion value 552A and second angular velocity values 552B. This example is of course non-limiting and first packet 551 and second packet 552 may contain any variety of values.

In the example of Fig. 4A, first packet 551 may not have been received by decoder 30, where decoder 30 may successfully receive second packet 552. Using second quaternion 552A (which may contain an angular value) in combination with the second angular velocity values 552B, decoder 30 may reconstruct the final orientation from packet 551. This process may be repeated over a variety of packets where decoder 30 can use the combination of latest payload data to recover the final orientation.

Fig. 4B shows a non-limiting example timing diagram 450 where active packet loss recovery occurs. In the example shown in Fig. 4B, encoder 20 will generate various packets that will be received by decoder 30. Encoder 20 will (at action 451) generate packet P1 including where a first payload PfA will be generated and a second payload PfN will be generated. In one example embodiment, the PfA payload is used in the case that a last sent packet has been received by decoder 30, where the PfN payload is used in the case that a last sent packet has not been received by decoder 30.

Encoder 20 will (at action 452) send packet P1 to decoder 30 where decoder 30 will process packet P1 (at action 453) and acknowledge receipt (at action 454) of packet P1. Encoder 20 will again (at action 455) generate packet P2 (containing payload PfN or payload PfA depending on the previous packet reception) and send packet P2 (at action 456) to decoder 30. As the packet was properly received (at action 453) by decoder 30, encoder 20 will send the PfA payload in packet P2 to decoder 30.

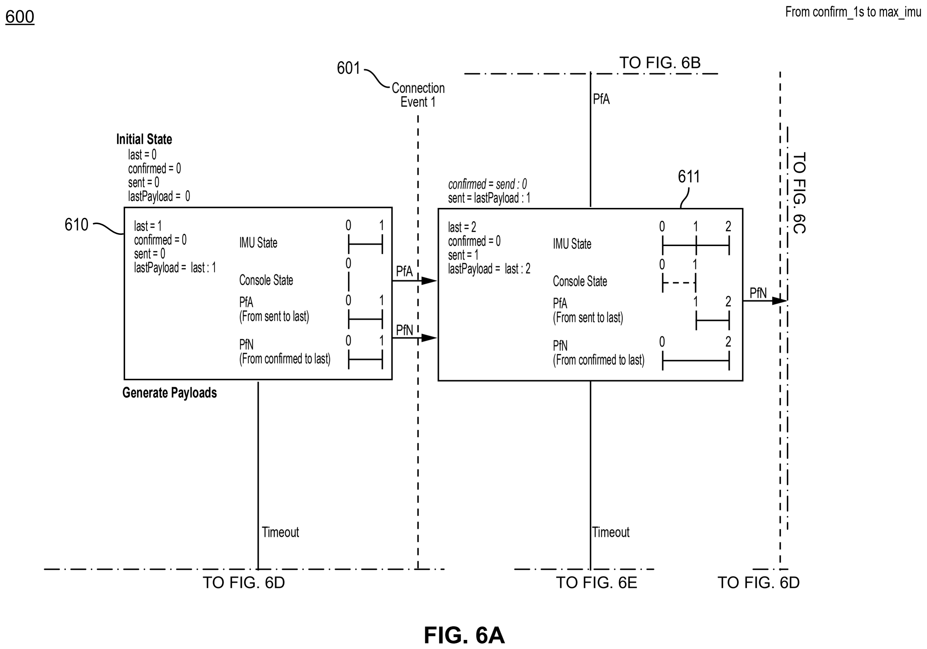

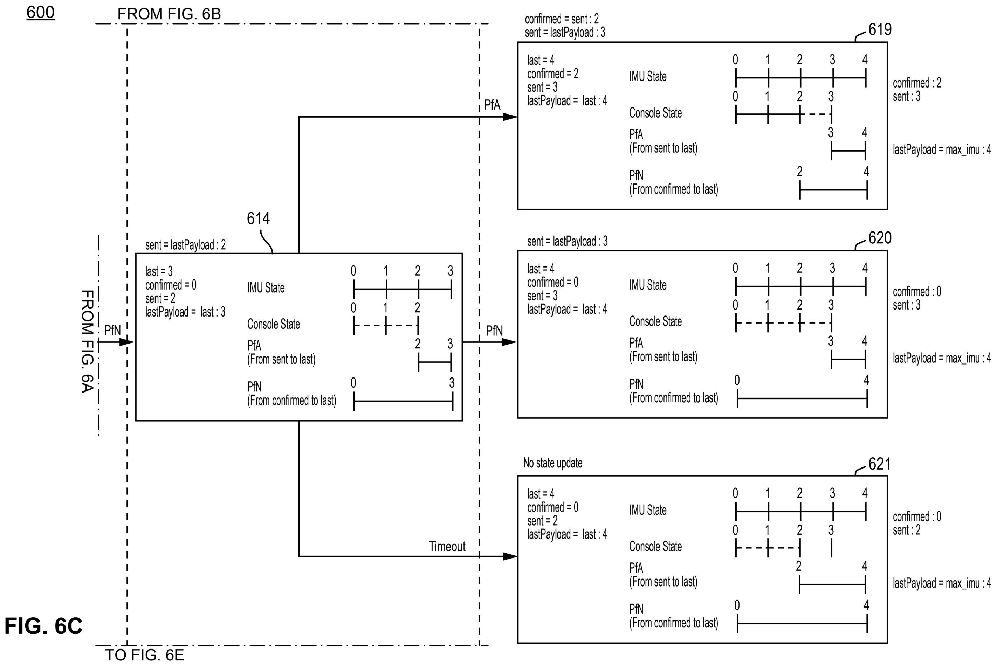

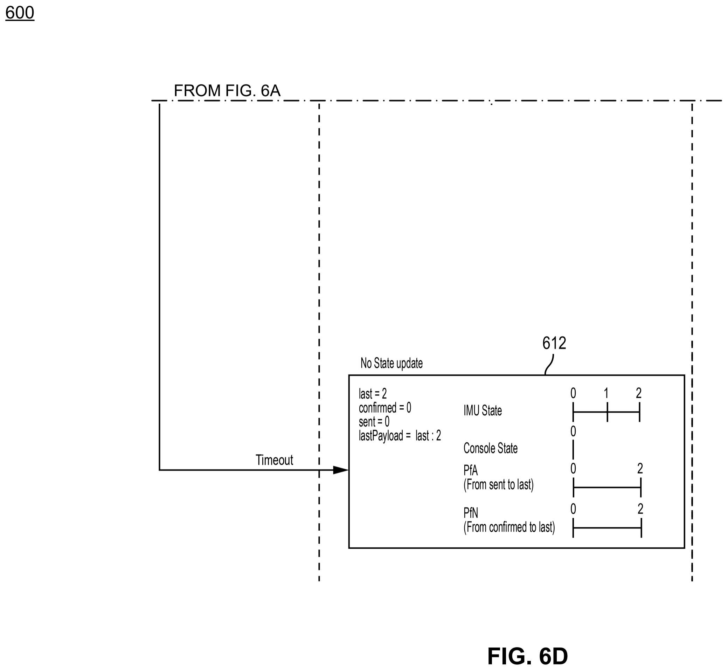

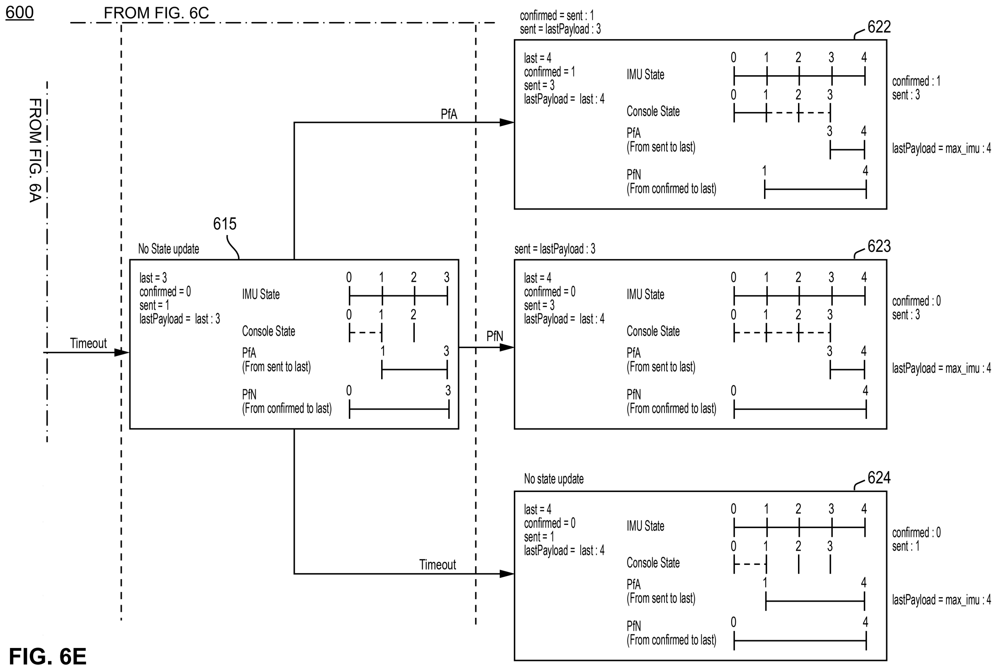

In the example of Fig. 4B, decoder 30 (at action 457) fails to receive packet P2 and encoder 20 can use certain feedback information to generate and send the appropriate next packet to decoder 30. In particular, encoder 20 will not necessarily know (at time of action 458) whether decoder 30 properly received the previous packet, but will still generate a next packet containing either payload PfA or payload PfN. Encoder 20 can (at action 458) generate payloads PfA and PfN and, upon receiving feedback that the previous packet was not received by decoder 30, send payload PfN in packet 3 (at action 459) to decoder 30 where decoder 30 will receive and process packet 3 (at action 460) and acknowledge receipt to encoder 20 (at action 461). The process for the active recovery is described in more detail below, and is further illustrated in the example of Figs. 6A-B. Both the active and passive recovery processes of system 1 are also further discussed below.

In more detail, system 1 can convey feedback about a transmission status (e.g., lost or received) of the previous packet when a new connection event occurs. When a connection event occurs in a conventional controller arrangement, the controllers are asked to send packet(s) immediately and even if the status of the previous packet is known at this moment, it is too late to generate completely the packet using this previous packet state. For certain simple type of data, like bitfields, in the case the previous packet was not received, the controller quickly updates the prepared packet with an OR binary operation on the bit field of the packet with the old field value. This operation superposes the two states together, ensuring no '1' is lost, as the OR operation will be applied until a packet is received.

For the IMU data, it is not possible to perform a simple binary OR operation, as the payload difference needed for the "last payload received" (referred to as PfA) and the "last payload lost" (referred to as PfN) are too important to be generated during the connection event. The present technology generates two IMU payload, for both cases, in advance between two connections events: one payload for the PfA and one for the PfN. The two packets are prepared with this payload and when a connection event occurs, depending the state of the previous packet, the PfA or the PfN packet is sent. Only after the connection event is completed, and the packet is sent, the encoder 20 can be informed of the status of the previous packet and update its internal state accordingly (the status of the just sent packet will stay unknown until the next connection event). The encoder 20 can then prepare the next two payload for the two possible outcomes for the just sent payload. The encoder 20 should take into account some older event as a long history can impact the next packet. The two payloads will not be the same if the last packet was the first to be lost, or if the 10 previous packets were lost.

In some cases, the pool packet from the system 100 can be lost so the controller(s) 10 "no connection event" will occur from the controller(s) 10 point of view and thus no PfA/PfN status for the last send packet can be transmitted to the encoder 20 at this point (multiple payload may need be received before the status of the last actually sent packet can be confirmed). The system 1 is able to handle this complexity and the result is that from the decoder 30 point of view on system 100 side, the packet stream appears as an uninterrupted stream of payload without interruption or discontinuity in timestamps (the only sign of a packet lost will be longer duration payload content).

As described herein, encoder 20 will generate at least two payload(s) in preparation of each connection event. A PfA payload will be used in the case of the last sent packet has been received by the system 100, and a PfN payload will be used in the case the last sent packet has not been received by the system 100. After each connection event, three possibilities can occur: (1) the controller 10 side signals to the encoder 20 that the PfA packet has been used, (2) the controller 10 side signal the encoder 20 that the PfN packet has been used, or (3) no signaling to the encoder 20 occurs because the connection event pool packet has been lost (such a case is referred to as a "timeout," which is an absence of event).

The system 1 may store various integration states that include any of: (1) the state buffer which includes history of last integration states (with a dense and a sparse part), (2) a last state that includes a most recent integrated state (can also include a last state of the dense buffer but identified clearly for readability), (3) a sent state which includes the most recent state the encoder 20 has been signaled having been sent (but could also be lost), (4) a confirmed state which includes a most recent state the encoder 20 has been confirmed having been received by the system 100 side, and/or (5) a lastPayload state that includes the most recent state used to generate a payload.

Various events associated with system 1 may evolve these integration states. One event could include an input sample feed where a new sample is integrated leading to a new integration state (the new state is pushed into the state buffer and the last state is set to this new state). Another event could include generate payloads where both PfA and PfN payload are generated and lastPayload is set to last. The two payloads are generated following the methods described herein using last as state B but with a different state A (for PfA packet, using sent as state A; for PfN packet, using confirmed as state B) Another event could include signal PfA where confirmed is set to sent, and sent is set to lastPayload, and yet another event could include signal PfN where sent is set to lastPayload. It should be appreciated that during a timeout event, none of the values are updated.

It should be appreciated the payloads cover a range of states or samples and system 1 needs to ensure the decoder 30 receives uninterrupted coverage (a payload can cover a long duration if needed and each received payload needs to cover the gap since the last received sample/state). All the generated payloads cover a range going back to the last state so whatever the sequence of PfA, PfN, or timeout, the encoder 20 can know that if the previously sent packet has been received (case PfA), the system 100 obtained this state. So for the new PfA generation, the encoder 20 can use this state as state A. However, as the last state will probably evolve due to Feed() between a payload generation and the signaling, or between the payload generation and the new payload generation, the last state actually used to generate the payload is stored as lastPayload to maintain reference of it. In the case of timeout, no payload at all has been sent, and the encoder 20 must act as if the previous generation never occurred so no state is used as state A (a reason why the sent state is set to lastPayload only in case of Signal (PfA or PfN) that confirm an actual packet transmission).

When a PfA signal is sent to the encoder 20 just after the connection event sending a payload N, the encoder 20 will have a "guarantee" that the system 100 side received the state leading up to the last state of the payload N-1. This can be referred to as the send state and it is guaranteed to be received all following payload must start at least of at a first state (it is what the confirmed state is set at the sent state value on signal PfA). Then for the PfN payload, the encoder 20 must cover the gap assuming the last packet has been lost so as to cover the interval between the confirmed state and the last state.

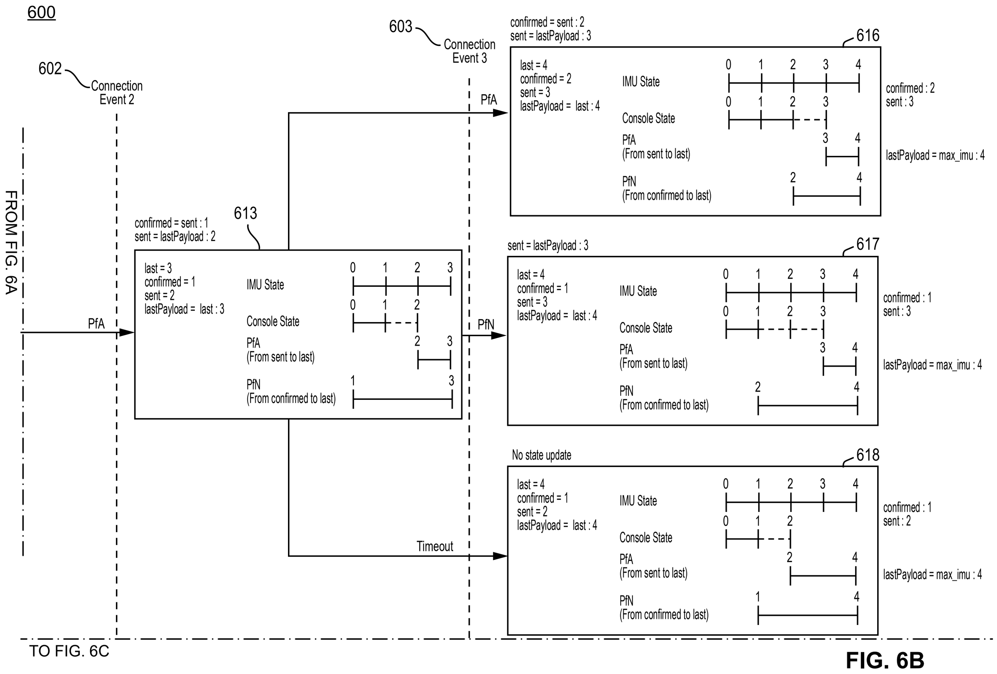

Figs. 6A and 6B are non-limiting example block diagrams depicting how the encoder 20 internal states evolve after at least three connection events 601-603. At each connection event 601-603, at least three cases are explored (i.e., PfA, PfN, and timeout) leading to multiple final internal states. The states 610-624 are identified by a number increases by one between check connection events 601-603 (imaging it as the state timestamp ODR in the case of a feed input sample frequency matching the connection event frequency). For each box representing states 610-624, at least the following items are included: (1) buffer state representing all the states present into the encoder 20 state buffer, (2) system 100 (e.g., console) state representing the encoder 20 knowledge about the states received by the system 100 side (solid lines represent state interval that the encoder 20 knows to have been received by the system 100 side -- dash lines represent state interval that the encoder 20 knows to have sent to the system 100 side, but not sure if it has been received by system 100), (3) PfA representing the content of the generated PfA payload, and/or (4) PfN representing the content of the generated PfN payload.

In one example embodiment, as encoder 20 enters into each different connection state 601-603, different items can be generated for each respective case. For example, as the system 1 enters connection state 602, encoder 20 will generate payload PfA (the result of which represented as state 613) and payload PfN (the result of which represented as state 614). Each of these payloads will contain different data providing a recovery case in the event the last packet was sent successfully or unsuccessfully. For example, PfN may contain a value having a length of 4 (i.e., 0-3) in state 614, where PfN may contain a value having a length of 3 (i.e., 1-3) in state 613. The different payloads PfA and PfN are generated by encoder 20 and then the appropriate payload (PfA or PfN) are sent to decoder 30 based on the knowledge of the state of the previously sent packet (e.g., known based on the feedback information).

With the recovery system described herein, the decoder 30 should never have perceived data gap as even in a case of packet loss, the first packet after the gap will cover by construction the whole gap duration (which results in the decoder 30 not having to perform passive recovery interpolation). In one example embodiment, if the nominal connection event interval is 5 ms, system 1 will generate one sample by PfA payload to cover the 5 ms (Pattern #1). If there is a one or two packet lost (or in anticipation in PfN payload), the system 1 will generate some packets covering longer duration with two or three samples (pattern #1 and #2). If there is more packet loss, the encoder 20 will still generate three samples, but with the pattern #3 each sample will cover a longer duration to fill the gap. The longer sample will make the quality of the signal more quantized and noisy, but the integrated orientation will be nearly unimpacted.

In the case of a situation with no possible feedback, or with the PfA/PfN being correctly used with some packet lost occurring in the system 100 itself (e.g., overflow due to system scheduling issues if the CPU or I/O load is too high), decoder 30 is built to be robust to actual undetected packet loss. There may be at least two different cases of packet loss: (1) detected packet loss where packets lost are detected by the wireless protocol or transport layer, and a PfA or PfN signal has been sent to the encoder 20 (in this case, there is no timestamp discontinuity), and (2) undetected packet loss where packets lost are not detected by the wireless protocol or transport layer, and PfA signal has been sent to the encoder 20 that "believes" decoder 30 has received the payload, but the packet has been actually lost (in this case, there is a timestamp discontinuity). A passive recovery process may address the case of undetected packet loss.

It should be appreciated that a payload format may contain at least two partially redundant information: (1) the payload duration (ODR) and (2) the end timestamps (ODR) (only the LSB). In a nominal case, from the decoder 30, the new payload duration will match the new payload end timestamps minus the end timestamp of the last payload: duration (N) = endTimestamps (N) - endTimestamps (N-1). In the case of one or multiple undetected packet losses, this "duration (N)" will be lower than "endTimestamps (N) - endTimestamps (N-1)" as a portion of the timestamp difference will be the duration of the packet gap.

When such a difference occurs, a recovery procedure may be initiated. During the recovery procedure, the decoder 30 stores as recoveryDuration the difference between the timestamp based duration and the payload duration, and the decoder 30 continues payload decoding as usual. When decoding of the first sample of a payload, to obtain the angular velocity the decoder 30 computes the difference between the sample quaternion and the last orientation quaternion and divides it by the sample duration + the recoveryDuration. The result will provide an average velocity that covers both the gap and the actual first payload sample.

To maintain the orientation integration if the system user provides correction, this angular velocity must be integrated during the total duration (so an extra recovery sample is created before the nominal sample with a duration matching the recoveryDuration, using the computed angular velocity). The acceleration may be less critical, so system 1 may not perform a complex pre-set recovery process, and the recovery sample may just use the same acceleration than the nominal sample. A flag is also set into the output recovery sample so the system 100 can have a specific behavior when utilizing recovery samples.

Using this recovery logic, system 1 can ensure very low orientation accumulation errors even in cases of undetected packet loss. The recovery samples will have a variable size to cover the gap in one sample, similar to conventional data recovery technology. An example scenario may include behavior between a detected gap or an undetected gap with 20 ms long gap of packet losses for a 5 ms payload duration with 1 kHz ODR. With a conventional recovery system, the encoder 20 will generate a 25 ms long payload with 3 samples. The encoder 20 will attempt to space them evenly and will end with 3 samples with 9 ms, 8 ms and 8 ms duration. The decoder 30 will output three samples maintain these respective durations. With the recovery system described herein, after the gap, the decoder 30 will receive a 5 ms long payload with with a 20 ms mismatch. The decoder 30 will output a 20 ms recovery sample, and a 5 ms nominal sample. Both samples will have a same angular velocity and acceleration so the available trajectory will be less detailed than with the conventional recovery system.

System 1 may include other additional advanced features. For example, system 1 may include connection event frequency adaptation. Conventional controller connection event frequency is not fixed in time depending on certain parameters (e.g., number of connected controllers, Wi-Fi usage). The system 100 can decide to switch between different frequencies at any moment and without other indication than the changes in the frequency of the connection events poll packets. Usually, in a nominal case the connection event interval is 5 ms (200 Hz) but, it can be switched to 10 ms or 15 ms. The architecture of system 1 can make these frequency change easy to handle (they are automatically handled as the "timeout" case).

The PfA and PfN payload generation can be held every 5 ms even when the connection event interval switches to 10 or 15 ms. In this case, the generate payload is not always used when the following payload generation occurs. As there is no usage and no signal PfA or PfN, the encoder 20 internal change is still the same as previously (only lastPayload state is used but it is not used as payload generation input) so it will be equivalent to call the encoder 20 payload generation after 10 ms, or 15ms (as if the intermediate unused payload had not been generated at all). If the controller(s) 10 firmware has the information of the change of the connection event frequency change, it can schedule the payload generation less frequently to save some CPU usage, but the received payload from the decoder 30 will be identical. This may also imply that system 1 can handle any combination of pool packet loss and connection event combination seamlessly or support new connection event frequency without modification.

System 1 may also include certain improvements related to quantization compensation. In particular, the encoder state integration is performed with some high resolution values (e.g., 32 bits per components) allowing low computation errors. However, except with pattern #0, it is not possible to send values in with high resolution so values are encoded onto less bits per component in the payload leading to quantization errors. Without special treatment, these quantization errors during encoding process are translated to small errors in the decoded output angular velocities and accelerations. These errors generate integration drift like yaw drift that is added to the drift linked to the sensor noise and errors.

To minimize there errors, each time encoder 20 generates a sample from state A to state B, it decodes the encoded quantized values and integrates state A with the quantized angular velocity and acceleration. Encoder 20 gives a new state B' (very close to state B but that represent what the decoder will actually use). For the next sample, the encoder 20 uses state B' as new state A instead of state B, so the difference is encoded from the state with quantization error, allowing to fix them partially and not drift. A simple illustration of the difference between without or with quantization compensation, with a constant 1-axis signal of 3.22 units and a quantization LSB of 1 unit, is provided below. Without quantization compensation, the decoder 30 accumulates 2 units of error every 9 samples, generating only 3 unit samples. With quantization, the differences are computed from the estimated decoder side integration so the accumulated error is fixed when it reaches 1 LSB.

For angular velocity, the correction is not as important as a quaternion is sent for the first sample of the payload allowing quantization error correction. However, system 1 is benefited by having better intermediate angular velocity samples for sample 2 and 3 and better acceleration integration. The quantization compensation interacts in some ways with the conventional recovery system. To avoid accumulation error, lastPayload is not set to last, but instead set to last' computed by integration of the quantized encoded samples. As two payloads are generated, even if both PfA and PfN payload aim the last state, the encoded sample will be slightly different so as the two different last' state (one for PfA payload and one for PfN payload). The encoder 20 does not immediately know which payload will be used to set lastPayload to last'. So two states are actually stored by the encoder 20 (lastPayloadIfPfA and lastPayloadIfPfN) and the state change logic includes: (1) generate payloads where both PfA and PfN payload are generated (for PfA packet: lastPayloadIfPfA is set to last'; for PfN packet: lastPayloadIfPfN is set to last'), (2) signal PfA where confirmed is set to sent, and sent is set to lastPayloadIfPfA, and (3) signal PfN where sent is set to lastPayloadIfPfN.

It should be appreciated that system 1 may be configured to high density ranges. As available bandwidth is limited in the payload, the encoder 20 is required to quantize the sample, reducing the quality for the payload pattern #1, #2 or #3 (for payload pattern #0, as there is only one sample to encode, the bit count per component is so high there is no quality degradation compared to the internal state). The quality of the quantization depends on at least two parameters: (1) the number of bits per components, limited by the allocated payload size in the packet, and (2) the encoding range or maximum encoded value, chosen by the desired maximal amplitude.

Quantization quality may be represented as: 2^(bitsPerComponents)/ encodingRange. For example, for the same amount of bits, switching the angular acceleration from 2000/s to 200/s increases the quality of the signal by 10. The sensor(s) often support wide amplitude for angular velocities and acceleration and the user can occasionally reach them during specific gameplay. Expected amplitude are often: max angular velocity: +- 2000 /s and max acceleration: +- 16 G. The vast majority of the time, the IMU signal may have a far smaller value (e.g., around 200/s or even less for small movements, and around +-1 G in addition to a 1 G acceleration in any possible direction, so a 2G envelope).

To increase quality most of the time, system 1 uses some high density range flags in the payload data for pattern #1 to #3. In system 1 configuration, a developer can configure two ranges: (1) a max range and (a) a high density range. For example, some recommended values for angular velocity may include a max range of 2000/s and a high density range of 250/s (i.e., 8 times less). Some recommended values for acceleration may include a max range of 16G and a high density range of 2G (i.e., 8 times less). When asked to generate a payload, the encoder 20 performs a first pass computing approximation of the angular velocities and accelerations for the two or three samples of the future payload. If every angular velocities are below 95% of the high density range, the angular velocity high density range usage flag is set to 1 (otherwise the flag is set to 0). If every acceleration are below 95% of the high density range, the acceleration high density range usage flag its set to 1 (otherwise the flag is set to 0).

The two flags are written in the payload using 1 bit each, and the actual sample encoding is performed using the max range or the high density flag depending on the state of each flag. The decoder 30 may also begin reading the flag in the received payload to know which ranges to use for the sample decoding. With the recommended range as an example, this simple compression increases the angular velocity quality by 8 times and the acceleration by 4 times in most cases. Equivalent gain of quality would have required 15 additional bits instead of 2 to reach an equivalent quantization quality increasing the bits per components.

It should be appreciated that system 1 may include certain improvements with respect to clock correction. In particular, IMU chips generate samples at regular intervals (but this regularity is not perfect). In some cases, timestamp increase rates can be a bit slow or fast compared to the system 100 timestamp increase (this rate difference can reach +/- 5 %). In other cases, the rate difference can change over time due to temperature change or other reasons. One solution would include keeping the output timestamp/duration at the theoretical value assuming the clock is exact, but it will cause at least two issues: (1) the output sample duration will be somewhat wrong leading to a bias error in the output signal, and (2) the output sample timestamp will drift from the system 100 clock and quickly cannot be used by a developer to synchronize the IMU sensors with other sensors.

System 1 can integrate a clock correction system to output samples with the following objectives: (1) new sample timestamp always equal last sample timestamp + new sample duration (no duration integration discontinuity), (2) the sample timestamp is close to the real-time timestamp with a relatively fixed latency that do not drift over time, and (3) the sample duration matches the real-time interval that the sample represents during acquisition (not quick clock correction with big duration modification, no sensibility to processing scheduling). To achieve these objectives, system 1 clock correction can maintain the following state: payloadTimestampUs (system 100 timestamp (in microseconds) of the current payload feed), previousPayloadTimestampUs (system 100 timestamp(s) of the last payload feed), previousOutputSampleTimestampUs (timestamp of the last output sample), previousTargetTimestampUs (correction timestamp target of the last output sample), timestampOdrSum (ODR time accumulator), timestampPayloadSum (system 100 time accumulator), pendingCorrection, pendingCorrectionAge (to check), activeTimestampRatio, pendingTimestampRatio, and/or pendingTimestampRatioAge (to check). The states are updated on different occasions. When the first payload is received, the state is initialized as follows: (1) previousPayloadTimestampUs, previousOutputSampleTimestampUs, and previousTargetTimestampUs are set to payloadTimestampUs - the current payload duration (ODR) converted using the theoretical ODR value (e.g., 1250 µs per unit (ODR)) which can simulate a hypothetical previous packet, (2) timestampOdrSum is set to a large value (e.g., 1000) to stabilize the initial timestamp ratio, and (3) timestampPayloadSum.

It should be appreciated that system 1 encodes the IMU sensor temperature in a packet. As temperature is low frequency data and not necessarily critical, only one 16 bit temperature (-103 to 153 C with 0.004/LSB) and only for payload pattern #0, #1, or #2 (#3 is usually used only for packet gaps where the 16 bits are used to increase the signal quality to compensate the payload long duration). The encoded temperature is an average temperature of all the samples between the state A and state B used to generate the payload. As the history is sparse and some states between state A and state B may be unavailable, the state is not storing actual temperature, but a temperature accumulator (for each input sample, the temperature of the sample is added to the temperature accumulator of the previous state to get the accumulator value for the new state). The accumulator is a 32-bit integer accumulator that store 16 bits encoded temperature to it can safely overflow. The average temperature is then computed by dividing the temperature accumulator difference by the payload duration.

It should also be appreciated that input sample can correspond to data acquired during IMU sensor saturation. This kind of saturated data can cause trouble for integrators, as the saturated data does not represent actual movement. Decoder 30 output samples have 2 Boolean flags to indicated if saturated angular velocity values or saturated acceleration values have been used to generate these output samples. To transmit this information, encoder 20 is fed with input samples containing Boolean saturation flags. As for temperature, the encoder 20 states stored in the state buffer or other saved state contain two accumulators: (1) saturated angular velocity count and (2) saturated acceleration count. These counters are increased by one during state integration process if the corresponding flag is raised in the input sample. During payload generation, the encoder 20 compares the counters for state A and state B used to generate the payload and raises the corresponding saturation flag in the payload header if the saturation count is different. The decoder 30 reads the flag in the payload header and applies it the all the output samples generated with this payload. It may flag too many output samples as saturated but it is not a big issues to flag a too many samples as saturated and using 2 bits per sample is too expensive compared to the gain.

System 1 may encounter certain handled limits including any of input sample saturation, long duration payload, corrupted payload, duplicate or inverted payload, where limits such as long undetected gap may not be handled. For input sample saturation, encoder 20 can handle samples with higher values than the configured range. It could cause acceleration accumulator to overflow if continued for a long period, and can cause saturated output as the config value (however quantization compensation can help address such an issue). It should be appreciated that long packets are handled even after 2s with the a ts loop estimator, and if corrupted payloads have a meaning, it should not crash but can generate bad output (where payloads are dropped if they have no meaning). Duplicate or inverted payloads will be dropped leading to recovery samples in cases of inverted payloads. It should be appreciated that undetected gaps higher than a 4096 duration ODR will lead to unexpected result but should be higher than the 2s of wireless protocol timeout.

The system 1 API can include two separated and independent sides: one API for the encoder 20 and one API for the decoder 30. For each side, the API consists on a software class (e.g., C++ class) to instantiate. Both encoder 20 and decoder 30 share similar life-cycle related methods: void Initialize(Config config) -- initialized the internals of the encoder 20 or the decoder 30 (taking a configuration as parameter); bool IsInitialized() -- checks if the class is initialized; and void Finalize() -- destroy the internals. The encoder 20 or decoder 30 must be initialized before any other function call.

It should be appreciated that the config structure can be identical for encoder 20 and decoder 30. Encoder 20 and decoder 30 are initialized with the same values (otherwise the output data quality cannot be guaranteed). Some of these values include at least: uint32_t timestampOdrToUs -- duration of an encoder 20 input sample in microsecond (for example 1042 µs per sample for a 960 Hz ODR sensor); float accelerationRange -- max expected acceleration for input samples, in m/s² (samples can actually have higher acceleration but the transmitted signal will be "clamped"); float angularVelocityRange -- max expected angular velocity for input samples, in radians/s-1 (sample can actually have higher angular velocity but the transmitted signal will be "clamped"); float highDensityAccelerationRange -- acceleration threshold for the acceleration high density mode; and float highDensityAngularVelocityRange -- angular velocity threshold for angular velocity mode.

Encoder 20 may include at least the following values: void Feed(InputSample const& sample) -- feed one input sample to the encoder 20; void GeneratePayloads(uint8_t* pfaPacket, uint8_t* pfnPacket, size_t payloadPfAMaxSize, size_t payloadPfNMaxSize, size_t*pfaPacketSize, size_t* pfnPacketSize) -- generate output payload for both PfA and PfN late decision cases; void GenerateNotOredPayload(uint8_t* payload, size_t payloadMaxSize, size_t* payloadSize) -- generate output payload for no feedback use cases; void SignalPfA()signal that the PfA payload has been used; and void SignalPfN() -- signal that the PfN payload has been used. An input sample structure may contain at least the following data: uint3 timestampOdr -- sequence number of the sample; float acceleration[3]acceleration in m/s²; float angularVelocity[3] -- angular velocity in rad/s-1; float temperature -- temperature in degrees Celcius; bool saturatedAcceleration -- true if the acceleration of the sample hit saturation; and bool saturatedAngularVelocity -- true if the angular velocity of the sample hit saturation. Decoder 30 may include at least the following values: size_t Feed(uint8_t const* payload, size_t packetSize, uint64_t packetTimestampUs) -- feed the transmitted payload to the decoder 30; size_t GetPayloadUsedSize(uint8_t const* payload, size_t packetSize) -- compute the useful payload size in the buffer decoding only a portion of the header; size_t GetAvailableOutputSampleCount() -- return the number of output sample in the output queue; and size_t GetSamples(OutputSixAxisSample* samples, size_t maxSampleCount) -- read and consume samples from the output queue. These examples are of course non-limiting and the technology described herein envisions any variety of data and input values associated with encoder 20 and/or decoder 30.

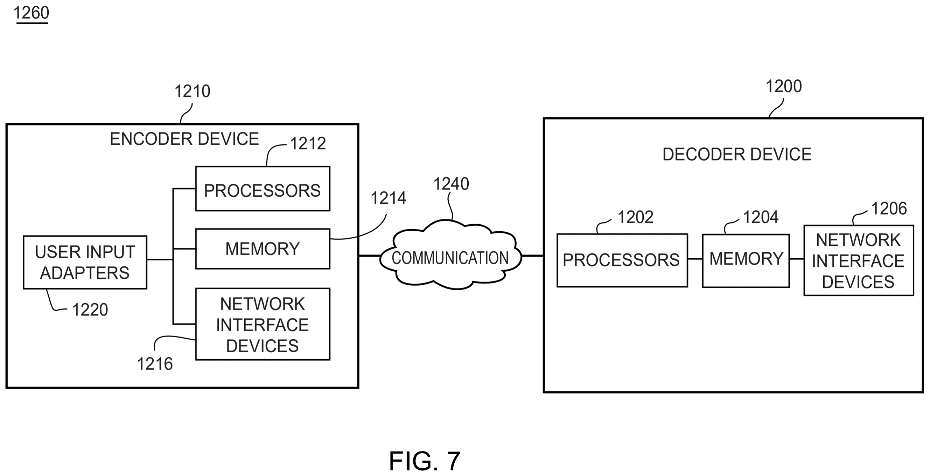

Fig. 7 shows a non-limiting example block diagram of a hardware architecture for the system 1260. In the example shown in Fig. 7, an encoder device 1210 communicates with a decoder device 1200 via a communication link 1240. The communication link 1240 could comprise a peer-to-peer connection between the encoder device 1210 and the decoder device 1200. In one example embodiment, the communication link 1240 may include a short-range wireless communication link using a communication protocol such as Bluetooth^{™}. It should be appreciated that this example is non-limiting and the communication link 1240 could include any other form of communication between decoder device 1200 and encoder device 1210. For example, communication link 1240 could include a network of interconnected computing devices, such as the internet. The communication link 1240 could also comprise a local area network (LAN). As will be described below, the hardware elements shown in Fig. 7 could be used to implement the various software components and actions shown and described in this disclosure as being included in and/or executed at the encoder device 1210 and decoder device 1200.

In some embodiments, the encoder device 1210 (which may also be referred to as "encoder system" herein) includes one or more of the following: one or more processors 1212; one or more memory devices 1214; one or more network interface devices 1216; and one or more user input adapters 1220. As will explained below, these elements (e.g., the processors 1212, memory devices 1214, network interface devices 1216, user input adapters 1220) are hardware devices (for example, electronic circuits or combinations of circuits) that are configured to perform various different functions for the encoder device 1210.

In some embodiments, each or any of the processors 1212 is or includes, for example, a single- or multi-core processor, a microprocessor (e.g., which may be referred to as a central processing unit or CPU), a digital signal processor (DSP), a microprocessor in association with a DSP core, an Application Specific Integrated Circuit (ASIC), a Field Programmable Gate Array (FPGA) circuit, or a system-on-a-chip (SOC) (e.g., an integrated circuit that includes a CPU and other hardware components such as memory, networking interfaces, and the like). And/or, in some embodiments, each or any of the processors 1212 uses an instruction set architecture such as x86 or Advanced RISC Machine (ARM).

In some embodiments, each or any of the memory devices 1214 is or includes a random access memory (RAM) (such as a Dynamic RAM (DRAM) or Static RAM (SRAM)), a flash memory (based on, e.g., NAND or NOR technology), a hard disk, a magneto-optical medium, an optical medium, cache memory, a register (e.g., that holds instructions), or other type of device that performs the volatile or non-volatile storage of data and/or instructions (e.g., software that is executed on or by processors 1212). Memory devices 1214 are examples of non-volatile computer-readable storage media.

In some embodiments, each or any of the network interface devices 1216 includes one or more circuits (such as a baseband processor and/or a wired or wireless transceiver), and implements layer one, layer two, and/or higher layers for one or more wired communications technologies (such as Ethernet (IEEE 802.3)) and/or wireless communications technologies (such as Bluetooth, WiFi (IEEE 802.11), GSM, CDMA2000, UMTS, LTE, LTE-Advanced (LTE-A), and/or other short-range, midrange, and/or long-range wireless communications technologies). Transceivers may comprise circuitry for a transmitter and a receiver. The transmitter and receiver may share a common housing and may share some or all of the circuitry in the housing to perform transmission and reception. In some embodiments, the transmitter and receiver of a transceiver may not share any common circuitry and/or may be in the same or separate housings.

In some embodiments, each or any of the user input adapters 1220 includes one or more circuits that receive and process user input data from one or more user input devices (not shown in Fig. 7) that are included in, attached to, or otherwise in communication with the encoder device 1210, and that output data based on the received input data to the processors 1212. Alternatively or additionally, in some embodiments each or any of the user input adapters 1220 is or includes, for example, a PS/2 interface, a USB interface, a touchscreen controller, or the like; and/or the user input adapters 1220 facilitates input from user input devices (not shown in Fig. 7) such as, for example, a keyboard, mouse, trackpad, touchscreen, etc...

User input adapters 1220 may include various input elements that can include, but are not limited to, inertial sensors (e.g., accelerometer, gyroscope, compass). In one example embodiment, user input adapters 1220 may include an acceleration sensor that detects acceleration (including gravitational acceleration) of the encoder device 1210, that is, force (including gravity) applied to the body device 1210. The acceleration sensor can detect a value of acceleration (linear acceleration) of a linear direction along a sensing axial direction, in acceleration applied to a detection unit of the acceleration sensor. The acceleration sensor can detect magnitudes of linear accelerations along predetermined triaxial directions. As the acceleration sensor, a triaxial acceleration sensor may be used, a combination of a biaxial acceleration sensor and a uniaxial acceleration sensor may be used, and three uniaxial acceleration sensors may be used. For example, in the case of a multiaxial acceleration sensor having two axes or more, acceleration of a component along each axis is detected as the acceleration applied to the detection unit of the acceleration sensor. In addition, the acceleration sensor may detect acceleration of a uniaxial direction or biaxial directions.

User input adapters 1220 may further include an angular velocity sensor configured to detect angular velocities around three axes and output data (e.g., angular velocity data) showing the detected angular velocities to the processors 1212. The angular velocity sensor may be configured using a triaxial gyro sensor and may be configured using a combination of gyro sensors having two axes or less. The angular velocity sensor detects an angular velocity around the x axis (per unit time), an angular velocity around the y axis (per unit time), and an angular velocity around the z axis (per unit time). Rotation directions around the xyz axes are called a roll direction, a pitch direction, and a yaw direction, respectively, on the basis of the z-axis positive direction of the encoder device 1210. The acceleration sensor or the gyro sensor is generally called an inertial sensor. It should be appreciated that encoder device 1210 may also output other various information including, but limited to, temperature data (e.g., using a temperature sensor) providing a temperature value of encoder device 1210.

In various embodiments, the encoder device 1210 includes one, or two, or three, four, or more of each or any of the above-mentioned elements (e.g., the processors 1212, memory devices 1214, network interface devices 1216, and user input adapters 1220). Alternatively or additionally, in some embodiments, the encoder device 1210 includes one or more of: a processing system that includes the processors 1212; a memory or storage system that includes the memory devices 1214; and a network interface system that includes the network interface devices 1216.

The encoder device 1210 may be arranged, in various embodiments, in many different ways. As just one example, the encoder device 1210 may be arranged such that the processors 1212 include: a multi (or single)-core processor; a first network interface device (which implements, for example, WiFi, Bluetooth, NFC, etc...); a second network interface device that implements one or more cellular communication technologies (e.g., 3G, 4G LTE, CDMA, etc...); memory or storage devices (e.g., RAM, flash memory, or a hard disk). The processor, the first network interface device, the second network interface device, and the memory devices may be integrated as part of the same SOC (e.g., one integrated circuit chip). As another example, the encoder device 1210 may be arranged such that: the processors 1212 include two, three, four, five, or more multi-core processors; the network interface devices 1216 include a first network interface device that implements Ethernet and a second network interface device that implements WiFi and/or Bluetooth; and the memory devices 1214 include a RAM and a flash memory or hard disk.

Decoder device 1200 also comprises various hardware components used to implement the software elements for decoder device. In some embodiments, the decoder device 1200 (which may also be referred to as "decoder device" herein) includes one or more of the following: one or more processors 1202; one or more memory devices 1204; and one or more network interface devices 1206. As will explained below, these elements (e.g., the processors 1202, memory devices 1204, network interface devices 1206) are hardware devices (for example, electronic circuits or combinations of circuits) that are configured to perform various different functions for the decoder device 1200.

In some embodiments, each or any of the processors 1202 is or includes, for example, a single- or multi-core processor, a microprocessor (e.g., which may be referred to as a central processing unit or CPU), a digital signal processor (DSP), a microprocessor in association with a DSP core, an Application Specific Integrated Circuit (ASIC), a Field Programmable Gate Array (FPGA) circuit, or a system-on-a-chip (SOC) (e.g., an integrated circuit that includes a CPU and other hardware components such as memory, networking interfaces, and the like). And/or, in some embodiments, each or any of the processors 1202 uses an instruction set architecture such as x86 or Advanced RISC Machine (ARM).

In some embodiments, each or any of the memory devices 1204 is or includes a random access memory (RAM) (such as a Dynamic RAM (DRAM) or Static RAM (SRAM)), a flash memory (based on, e.g., NAND or NOR technology), a hard disk, a magneto-optical medium, an optical medium, cache memory, a register (e.g., that holds instructions), or other type of device that performs the volatile or non-volatile storage of data and/or instructions (e.g., software that is executed on or by processors 1202). Memory devices 1204 are examples of non-volatile computer-readable storage media.

In some embodiments, each or any of the network interface devices 1206 includes one or more circuits (such as a baseband processor and/or a wired or wireless transceiver), and implements layer one, layer two, and/or higher layers for one or more wired communications technologies (such as Ethernet (IEEE 802.3)) and/or wireless communications technologies (such as Bluetooth, WiFi (IEEE 802.11), GSM, CDMA2000, UMTS, LTE, LTE-Advanced (LTE-A), and/or other short-range, midrange, and/or long-range wireless communications technologies). Transceivers may comprise circuitry for a transmitter and a receiver. The transmitter and receiver may share a common housing and may share some or all of the circuitry in the housing to perform transmission and reception. In some embodiments, the transmitter and receiver of a transceiver may not share any common circuitry and/or may be in the same or separate housings.

In various embodiments, the decoder device 1200 includes one, or two, or three, four, or more of each or any of the above-mentioned elements (e.g., the processors 1202, memory devices 1204, network interface devices 1206). Alternatively or additionally, in some embodiments, the decoder device 1200 includes one or more of: a processing system that includes the processors 1202; a memory or storage system that includes the memory devices 1204; and a network interface system that includes the network interface devices 1206.

The decoder device 1200 may be arranged, in various embodiments, in many different ways. As just one example, the decoder device 1200 may be arranged such that the processors 1202 include: a multi (or single)-core processor; a first network interface device (which implements, for example, WiFi, Bluetooth, NFC, etc...); a second network interface device that implements one or more cellular communication technologies (e.g., 3G, 4G LTE, CDMA, etc...); memory or storage devices (e.g., RAM, flash memory, or a hard disk). The processor, the first network interface device, the second network interface device, and the memory devices may be integrated as part of the same SOC (e.g., one integrated circuit chip). As another example, the decoder device 1200 may be arranged such that: the processors 1202 include two, three, four, five, or more multi-core processors; the network interface devices 1206 include a first network interface device that implements Ethernet and a second network interface device that implements WiFi and/or Bluetooth; and the memory devices 1204 include a RAM and a flash memory or hard disk.

As previously noted, whenever it is described in this document that a software module or software process performs any action, the action is in actuality performed by underlying hardware elements according to the instructions that comprise the software module. Consistent with the foregoing, in various embodiments, each or any combination of the encoder device 1210 or the decoder device 1200, each of which will be referred to individually for clarity as a "component" for the remainder of this paragraph, are implemented using an example of the encoder device 1210 or the decoder device 1200 of Fig. 7.

In such embodiments, the following applies for each component: (a) the elements of the encoder device 1210 shown in Fig. 7 (i.e., the one or more processors 1212, one or more memory devices 1214, one or more network interface devices 1216, and one or more user input adapters 1220) and the elements of the decoder device 1200 (i.e., the one or more processors 1202, one or more memory devices 1204, one or more network interface devices 1206), or appropriate combinations or subsets of the foregoing, are configured to, adapted to, and/or programmed to implement each or any combination of the actions, activities, or features described herein as performed by the component and/or by any software modules described herein as included within the component; (b) alternatively or additionally, to the extent it is described herein that one or more software modules exist within the component, in some embodiments, such software modules (as well as any data described herein as handled and/or used by the software modules) are stored in the respective memory devices (e.g., in various embodiments, in a volatile memory device such as a RAM or an instruction register and/or in a non-volatile memory device such as a flash memory or hard disk) and all actions described herein as performed by the software modules are performed by the respective processors in conjunction with, as appropriate, the other elements in and/or connected to the encoder device 1210 or decoder device 1200; (c) alternatively or additionally, to the extent it is described herein that the component processes and/or otherwise handles data, in some embodiments, such data is stored in the respective memory devices (e.g., in some embodiments, in a volatile memory device such as a RAM and/or in a non-volatile memory device such as a flash memory or hard disk) and/or is processed/handled by the respective processors in conjunction, as appropriate, the other elements in and/or connected to the encoder device 1210 or decoder device 1200; (d) alternatively or additionally, in some embodiments, the respective memory devices store instructions that, when executed by the respective processors, cause the processors to perform, in conjunction with, as appropriate, the other elements in and/or connected to the encoder device 1210 or decoder device 1200, each or any combination of actions described herein as performed by the component and/or by any software modules described herein as included within the component.

The hardware configurations shown in Fig. 7 and described above are provided as examples, and the subject matter described herein may be utilized in conjunction with a variety of different hardware architectures and elements. For example: in many of the Figures in this document, individual functional/action blocks are shown; in various embodiments, the functions of those blocks may be implemented using (a) individual hardware circuits, (b) using an application specific integrated circuit (ASIC) specifically configured to perform the described functions/actions, (c) using one or more digital signal processors (DSPs) specifically configured to perform the described functions/actions, (d) using the hardware configuration described above with reference to Fig. 7, (e) via other hardware arrangements, architectures, and configurations, and/or via combinations of the technology described in (a) through (e).

In many places in this document, software modules and actions performed by software modules are described. This is done for ease of description; it should be understood that, whenever it is described in this document that a software module performs any action, the action is in actuality performed by underlying hardware components (such as a processor and a memory) according to the instructions and data that comprise the software module.

### Technical Advantages

The technology described herein provides improvements to existing technology for performing input processing between devices. In particular, the technology utilizes a system for encoding and decoding data (e.g., in a wireless communication process) between a first device (e.g., controller) and a second device (e.g., game system). In one example embodiment, the system will employ both an active and/or passive recovery process for packet loss management. During the recovery process, an encoder may generate at least two different payloads where (using feedback information) the encoder will send one of the two payloads based on whether a previous sent packet was received by a decoder. In doing so, the technology advantageously improves the communication process using conventional wireless communication protocols such that there is little to no perceived data loss between devices.

### Selected Definitions

Whenever it is described in this document that a given item is present in "some embodiments," "various embodiments," "certain embodiments," "certain example embodiments, "some example embodiments," "an exemplary embodiment," or whenever any other similar language is used, it should be understood that the given item is present in at least one embodiment, though is not necessarily present in all embodiments. Consistent with the foregoing, whenever it is described in this document that an action "may," "can," or "could" be performed, that a feature, element, or component "may," "can," or "could" be included in or is applicable to a given context, that a given item "may," "can," or "could" possess a given attribute, or whenever any similar phrase involving the term "may," "can," or "could" is used, it should be understood that the given action, feature, element, component, attribute, etc. is present in at least one embodiment, though is not necessarily present in all embodiments. Terms and phrases used in this document, and variations thereof, unless otherwise expressly stated, should be construed as open-ended rather than limiting. As examples of the foregoing: "and/or" includes any and all combinations of one or more of the associated listed items (e.g., a and/or b means a, b, or a and b); the singular forms "a", "an" and "the" should be read as meaning "at least one," "one or more," or the like; the term "example" is used provide examples of the subject under discussion, not an exhaustive or limiting list thereof; the terms "comprise" and "include" (and other conjugations and other variations thereof) specify the presence of the associated listed items but do not preclude the presence or addition of one or more other items; and if an item is described as "optional," such description should not be understood to indicate that other items are also not optional.

As used herein, the term "non-transitory computer-readable storage medium" includes a register, a cache memory, a ROM, a semiconductor memory device (such as a D-RAM, S-RAM, or other RAM), a magnetic medium such as a flash memory, a hard disk, a magneto-optical medium, an optical medium such as a CD-ROM, a DVD, or Blu-Ray Disc, or other type of device for non-transitory electronic data storage. The term "non-transitory computer-readable storage medium" does not include a transitory, propagating electromagnetic signal.

### Further Applications of Described Subject Matter

Although process steps, algorithms or the like, including without limitation with reference to the figures, may be described or claimed in a particular sequential order, such processes may be configured to work in different orders. In other words, any sequence or order of steps that may be explicitly described or claimed in this document does not necessarily indicate a requirement that the steps be performed in that order; rather, the steps of processes described herein may be performed in any order possible. Further, some steps may be performed simultaneously (or in parallel) despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary, and does not imply that the illustrated process is preferred.
Although various embodiments have been shown and described in detail, the claims are not limited to any particular embodiment or example. None of the above description should be read as implying that any particular element, step, range, or function is essential. All structural and functional equivalents to the elements of the above-described embodiments that are known to those of ordinary skill in the art are expressly incorporated herein by reference and are intended to be encompassed. Moreover, it is not necessary for a device or method to address each and every problem sought to be solved by the present invention, for it to be encompassed by the invention. No embodiment, feature, element, component, or step in this document is intended to be dedicated to the public.

## Claims

1. A system, comprising:
a first device having processing circuitry including at least one processor and inertial sensing circuitry; and
a second device having processing circuitry including at least one processor, wherein
the first device is configured to:
generate an input feed containing a plurality of input data, wherein the input data includes at least inertial sensing data generated by the inertial sensing circuitry;
integrate the input feed into an encoder state and push the encoder state to a state buffer;
obtain feedback information based on a communication state between the first device and the second device; and
generate payload data based on state information in the state buffer and based on the feedback information, wherein
the second device is configured to:
poll the first device and obtain the payload data;
decode the payload data to generate output data; and
utilize the output data for game processing.

2. The system of claim 1, wherein the second device is configured to re-construct input data in the payload data when a gap occurs in transmission between the first device and the second device.

3. The system of claim 1, wherein the input feed is generated by the first device at a first time duration.

4. The system of claim 3, wherein the payload data is generated by the first device at a second time duration greater than the first time duration.

5. The system of claim 1, wherein the payload data includes a first payload associated with a last sent payload having been received by the second device.

6. The system of claim 5, wherein the payload data includes a second payload associated with the last sent payload having failed to be received by the second device.

7. The system of claim 1, wherein the encoder state is pushed to a dense state buffer covering a first time sample, and the encoder state is pushed to a sparse state buffer covering a second time sample.

8. The system of claim 1, wherein the plurality of input data includes any of: timestamp data, angular velocity data, acceleration data, temperature data, and metadata.

9. The system of claim 1, wherein the generated output data includes any of: timestamp and duration data, sample indices data, angular velocity data, acceleration data, temperature data, and metadata.

10. A non-transitory computer readable storage medium configured to store computer readable instructions that, when executed by a processor of an information processing apparatus, cause the information processing apparatus to provide execution comprising:
generating an input feed containing a plurality of input data, wherein the input data includes at least inertial sensing data generated by inertial sensing circuitry of a first input device;
integrating the input feed into an encoder state and pushing the encoder state to a state buffer;
obtaining feedback information based on a communication state between the first device and a second device; and
generating payload data based on state information in the state buffer and based on the feedback information.

11. The non-transitory computer readable storage medium of claim 10, wherein the second device is configured to re-construct input data in the payload data when a gap occurs in transmission between the first device and the second device.

12. The non-transitory computer readable storage medium of claim 10, wherein the input feed is generated at a first time duration.

13. The non-transitory computer readable storage medium of claim 12, wherein the payload data is generated at a second time duration greater than the first time duration.

14. The non-transitory computer readable storage medium of claim 10, wherein the payload data includes a first payload associated with a last sent payload having been received by the second device.

15. The non-transitory computer readable storage medium of claim 14, wherein the payload data includes a second payload associated with the last sent payload having failed to be received by the second device.

16. A method for encoding data, the method comprising:
generating an input feed containing a plurality of input data, wherein the input data includes at least inertial sensing data generated by inertial sensing circuitry of a first input device;
integrating the input feed into an encoder state and pushing the encoder state to a state buffer;
obtaining feedback information based on a communication state; and
generating payload data based on state information in the state buffer and based on the feedback information.

17. The method of claim 16, wherein a second device is configured to re-construct input data in the payload data when a gap occurs in transmission between the first device and a second device.

18. The method of claim 16, wherein the input feed is generated at a first time duration.

19. The method of claim 18, wherein the payload data is generated at a second time duration greater than the first time duration.

20. The method of claim 16, wherein the payload data includes a first payload associated with a last sent payload having been received by a second device.
